Europäisches Patentamt

European Patent Office

Office européen des brevets

(19)

(11) EP 1 526 655 A2

(12) EUROPEAN PATENT APPLICATION

(43) Date of publication:
27.04.2005 Bulletin 2005/17

(51) Int Cl.$^7$: H04B 7/185

(21) Application number: 04256426.0

(22) Date of filing: 19.10.2004

(84) Designated Contracting States:
AT BE BG CH CY CZ DE DK EE ES FI FR GB GR
HU IE IT LI LU MC NL PL PT RO SE SI SK TR
Designated Extension States:
AL HR LT LV MK

(30) Priority: 20.10.2003 US 687926

(71) Applicant: Gilat Satellite Networks Ltd.
49130 Petach Tikva (IL)

(72) Inventors:
• Heiman, Rafi
Hashavim 45930 (IL)

• Meiri, Tzvi
Tel-Aviv (IL)
• Ram, Uzi
Givat Elah (IL)
• Shmuel, Avi
Ramat Gan (IL)

(74) Representative: Wallin, Nicholas James et al
Withers & Rogers
Goldings House
2 Hays Lane
London SE1 2HW (GB)

(54) **Efficient access in satellite communication system**

(57)    Efficient utilization of a shared pool of time-frequency slot resources in a return channel among a plurality of remote terminals in a satellite communication system. Within the shared pool of time-frequency slot resources for data, allowing access through circuit-switched TDM allocations, reservation allocations, or random access. Within the shared pool of time-frequency resources for control, allowing duplicate control burst transmissions in random access. Other improvements in the control channel include self-allocation by the remote terminals or hub-allocation to the remote terminals.

FIG. 1

**Description**

Aspects of the present invention are directed generally to efficient access in a satellite communication system, and more particularly to improvements in utilizing, assigning, and managing communication channels in a satellite communication system.

Conventional satellite network communication systems have a central hub and a plurality of remote terminals, such as very small aperture terminals (VSATs). The hub transmits over a forward, or outbound, channel a time-domain multiplexed (TDM) signal that is distributed to some or all of the remote terminals. The remote terminals transmit in bursts toward the hub via a shared return, or inbound, channel. The data bursts of the return channel are typically organized into time slots, and groups of time slots are organized into frames. The return channel resources are shared among the various remote terminals by using TDM or frequency-time domain multiplexing (FTDM).

Several examples of multiple access schemes include contention-based random access schemes, a simple fixed time division multiplexing access (TDMA) system, and reservation systems.

Contention-based random access solutions typically involve remote terminals transmitting in bursts to randomly selected slots within a shared pool of slots and frequencies on the return data channel. Randomization over two dimensions, such as the time and frequency domains, is taught by U.S. Patent No. 5,053,782, entitled "Commercial Satellite Communication System," to Levinberg and Ram. Contention-based random access solutions typically involve a dilemma and a well-known trade-off between response time and throughput. Contention-based random access solutions, such as slotted ALOHA, tend to have a short response-time per transaction. However, the throughput of such solutions is limited theoretically to about 37% utilization of the available return data channel. Also, such contention-based random solutions are prone to collisions, where two remote terminals may transmit overlapping data during the same time-frequency slot. If there is a collision, then a large number of duplicative retransmissions will be required, thereby producing a substantial amount of delay for the data transfer. In practice, in order to achieve acceptable average delays, the load is limited to about 30%.

Another multiple access scheme is a simple fixed time-division multiple access (TDMA) system. The fixed TDMA system provides for predetermined slot allocations to each remote terminal on the return data channel, and thus there are no collisions between remote terminals. However, a fixed TDMA system provides for static allocation of resources and is therefore inefficient where remote terminals may only have a sporadic need for the statically allocated slots on the return data channel.

Another popular approach to a multiple access scheme is a reservation system, in which a central hub allocates time-frequency slots according to the momentary needs of a particular remote terminal. In a reservation system, the return channel is made up of a return control channel and a return data channel. The control channel is used for setting up data transmissions in the data channel, e.g., by reserving time slots and frequencies in the data channel. Accordingly, in a reservation system, the remote terminals each transmit an allocation request to the hub through the return control channel whenever there is a need to transfer data over the return data channel. In response to the allocation requests, the hub allocates time slots and frequencies for the requesting remote terminals. Such allocation requests and responses cause additional delay and transmission overhead.

In a reservation system, there is still the question of how remote terminals gain access to the control channel. In one instance, the return control channel may be a predetermined TDM channel shared among all remote terminals. In that case, each remote terminal would have a fixed and dedicated (i.e. static) slot for control transmission. This is usually very inefficient, as at most times a given remote terminal will not need to make use of its dedicated slot. Moreover, the response time is long since a remote terminal needs to wait until its allocated slot arrives before the remote terminal can request a data channel allocation. For example, consider a satellite network with 100,000 remote terminals and desired return control channel time slots of 10 milliseconds each. To reduce response time to a reasonable delay, the TDM frame length would be, for example, one second. This means that one hundred remote terminals would share a single TDM carrier, and that one thousand TDM carriers, each of a different frequency, would be needed to support the return control channel. Now suppose that the remote terminals' main application is Internet browsing and that only about 10% of the remote terminals are expected to be actively browsing at any particular time. In such a case, approximately 90% of the return control channel resources would be wasted. In other words, a majority of the time slots in a majority of the frequency carriers would be empty a majority of the time.

Another method for accessing the control channel is to use random access in the return control channel. As response time is already long due to the need to precede data transmissions with allocation requests and to wait for the allocation itself from the hub, it is desirable to diminish extra delays caused by collisions and retransmissions on the return control channel. For example, as similarly discussed above with regard to slotted ALOHA access, reducing the average delay could only be achieved by imposing a very low load. However, this also results in a low utilization of available capacity, which is not efficient.

Aspects of the present invention are directed to combining reservation-based allocation with the options of random access and/or TDM circuit-switched allocations in a return data channel. In doing so, resources that were previously unassigned and/or unused by the reservation-based traffic may be more efficiently utilized. Moreover, by incorporating circuit-switched resources into the return channel, applications that prefer constant rate and constant delay, such as voice and video applications, may be better supported.

Further aspects of the invention are directed to, in a combined reservation and random access system, the inclusion of time slots and/or frequencies in the return data channel that are dedicated (at least temporarily) to circuit-switched access. The number of time slots and/or frequencies that are so dedicated may change dynamically to account for current and/or anticipated network needs.

Still further aspects of the present invention are directed to utilizing resources in the return channel that would otherwise be empty using a reservation-based allocation system. For example, time slots in the return control channel may be more efficiently utilized to reduce the number of empty time slots.

Yet further aspects of the present invention are directed to an improved random-access return channel protocol. This improved random access protocol may allow for automatic allocation of network resources to active remote terminals, either by automatic hub assignment or by self-allocation by the remote terminals themselves.

Yet further aspects of the present invention are directed to multiple return control channel attempts. A remote terminal may attempt to access the return control channel by multiple attempts without waiting for a response from the hub. This aspect may be particularly advantageous when used in a return control channel in accordance with other aspects of the invention.

These and other aspects of the present invention will be apparent upon reviewing the figures and detailed description provided herein.

The foregoing summary of the invention, as well as the following detailed description of illustrative embodiments, is better understood when read in conjunction with the accompanying drawings, which are included by way of example, and not by way of limitation with regard to the claimed invention.

FIG. 1 illustrates a typical multiple access two-way satellite communication environment showing a number of two-way remote terminals communicating with a network hub.

FIG. 2 is a diagram of a time cycle structure of a return channel protocol in accordance with at least one aspect of the present invention.

FIG. 3 is a diagram of a time cycle structure of a return channel protocol utilizing mini-slots for the return control channel in accordance with at least one aspect of the present invention.

FIG. 4 is a diagram of a time cycle structure of a return data channel accessible by remote terminals utilizing circuit switched TDM allocations, reservation-based allocations, or random access in accordance with at least one aspect of the present invention.

FIG. 5 is a diagram of a time cycle structure of a return control channel utilizing mini-slots and a return data channel accessible by remote terminals utilizing circuit switched TDM allocations, reservation-based allocations, or random access in accordance with at least one aspect of the present invention.

FIG. 6 is a diagram of a time cycle structure of a shared pool of time-frequency slots comprising a return control channel utilizing mini-slots and a return data channel accessible by remote terminals utilizing circuit switched TDM allocations, reservation-based allocations, or random access in accordance with at least one aspect of the present invention.

FIG. 7 is a diagram of a time cycle structure illustrating self-allocation within the return control channel in accordance with at least one aspect of the present invention.

FIG. 8 is a diagram of a time cycle structure illustrating hub-allocation within the return control channel in accordance with at least one aspect of the present invention.

FIG. 9 is a functional block diagram of an illustrative remote terminal in accordance with at least one aspect of the present invention.

Embodiments of the invention will now be described.

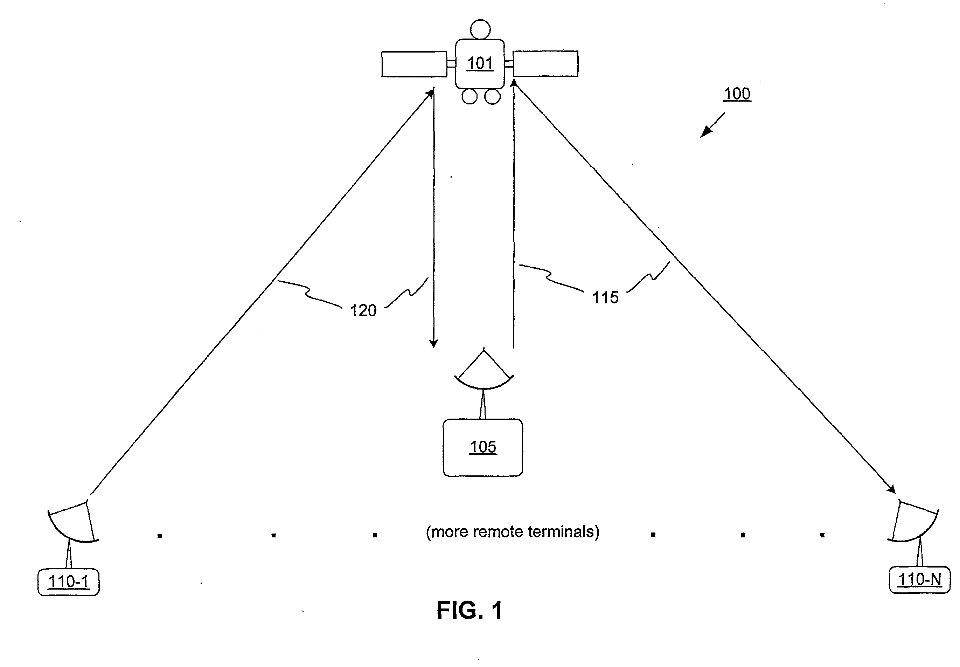

FIG. 1 shows a simplified version of an illustrative satellite communication system 100, which includes a satellite 101, at least one network hub 105, and a plurality of two-way remote terminals 110-1 to 110-N. Remote terminals 110-1 to 110-N may be, for example, very small aperture terminals (VSATs). During operation of the satellite communication system 100, remote terminals 110-1 to 110-N can transmit data to hub 105 and receive data from hub 105. The data transferred by the remote terminals 110-1 to 110-N to the hub 105 can be intended for the hub 105 itself or for other terminals. If the data is intended for remote terminals distinct from the hub 105, then the hub 105 will subsequently retransmit the received data appropriately. Further, satellite communication system 100 is not limited to the use of a single hub but may incorporate a plurality of hubs.

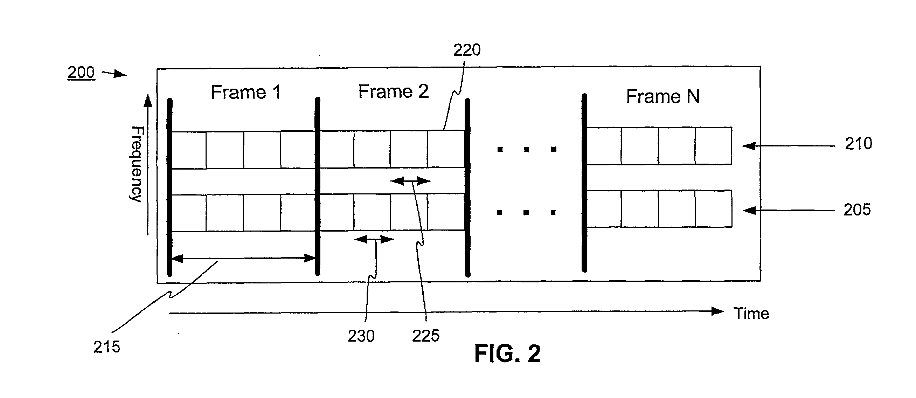

The remote terminals 110-1 to 110-N receive communications from hub 105 through outbound channel 115. Hub 105 may communicate with each remote terminal individually or a plurality of remote terminals simultaneously over outbound channel 115. When a remote terminal communicates with hub 105, the remote terminal transmits data to the hub 105 though burst transmissions on return channel 120. Return channel 120 may be shared among the plurality of remote terminals 110-1 to 110-N, and thus the plurality of remote terminals 110-1 to 110-N can transmit in bursts over shared return channel 120. Return channel 120 is time-division multiplexed (TDM) and may be further be divided by frequency according to frequency-time division multiplexing (FTDM). Both outbound channel 115 and return channel 120 are not limited to a single channel each, but rather may include a plurality of channels and frequencies. In addition, return channel 120 may include a return data channel and a return control channel as shown in FIG. 2, wherein the frequencies utilized for the return data channel may be, for example, distinct from the frequencies utilized for the return control channel. Alternatively, some or all of the frequencies used for the return data channel may be shared with some or all of the frequencies used for the return control channel.

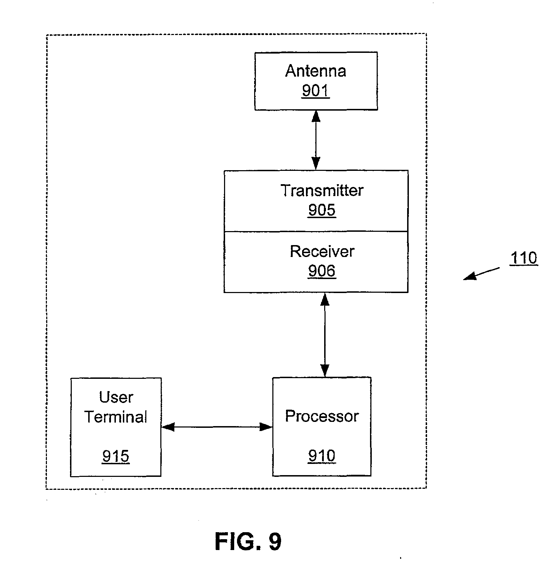

Referring to FIG. 9, each of the illustrative remote terminals 110-1 to 110-N may include a transmitter 905 and a receiver 906 (or a combined transceiver) coupled to an antenna 901 such as a satellite dish, and configured to wirelessly communicate with the satellite 101 over the return channel 120 and the outbound channel 115, respectively. A processor 910 may be directly or indirectly coupled to the transmitter 905 and the receiver 906 and configured to interpret received signals on the outbound channel 115 and to generate signals to be sent over the return channel 120. The processor 910 may be any type of processor, such as a computer, a server, and/or circuitry suitable for interpreting and generating signals compatible with the illustrative satellite system 100 as described herein. A user terminal 915 may further be coupled to the processor 910 (or be included as part of the processor 910).

As illustrated in FIG. 2, a return channel protocol 200 for the return channel 120 includes a return data channel 205 and a return control channel 210. Both the return data channel 205 and return control channel 210 contain a plurality of frames such as Frames 1 to N. Each frame is of a particular time length 215 and contains of a plurality of time slots 220. Each time slot 220 may have a time and frequency component and thus may be referred to as a time-frequency slot. The number of time slots 220 per frame is not limited to the small number of illustrative time slots shown in each frame in FIG. 2. Furthermore, return data channel 205 and return control channel 210 are not limited to a single frequency each but may include a plurality of frequencies. Moreover, the time slots length 225 for the return control channel 210 need not be of the same length as the time slots length 230 in return data channel 205. Indeed, the return control channel 210 may utilize a special short-time slots structure with time slots that are shorter in length than the time slots in return data channel 205. In addition to being used for allocation requests, the return control channel 210 may further be used for health check traffic and/or for general monitoring and control (M&C). The return control channel 210 may also be used by remote terminals to transmit frequency and timing data to the hub. Also, a combination of slots for data and for control may be used on the same frequency channel but on different TDM allocations within a frame.

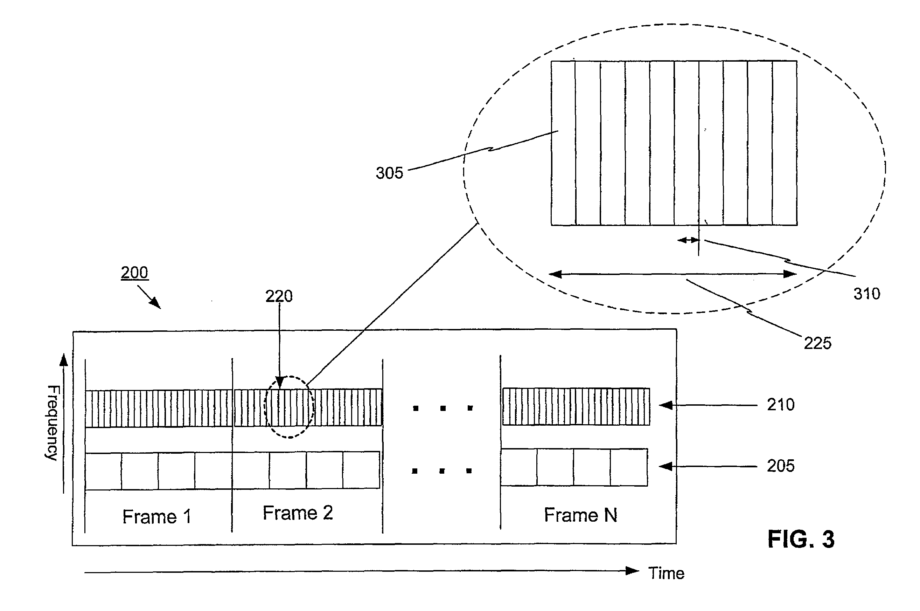

FIG. 3 illustrates a special short-slots structure implementation in the return control channel 210. As shown in FIG. 3, a slot 220 of length 315 may be further subdivided into smaller slots, or mini-slots 305, each with a mini-slot length 310. Each remote terminal 110-1 to 110-N desiring to transmit on the return control channel 210 will transmit a short control burst into a mini-slot 305. For example, assume that time slot 220 has a 10 millisecond length. The slot 220 may be further subdivided in ten mini-slots 305 each with a length of 1 millisecond. Thus, in this example, up to ten remote terminals can transmit short control bursts into the ten mini-slots. Each mini-slot burst duration length may be significantly shorter than the data burst duration length.

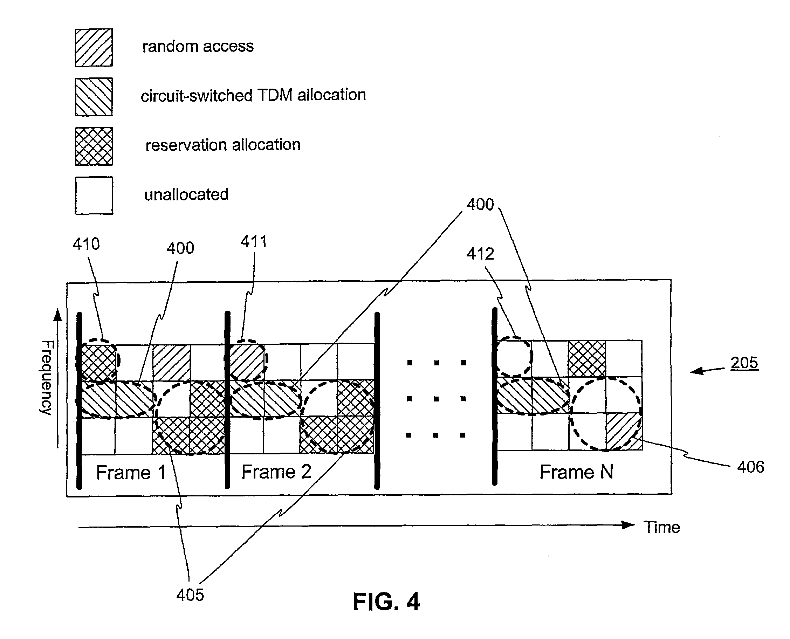

FIG. 4 shows how return data channel 205 may be shared among remote terminals 110-1 to 110-N capable of utilizing circuit-switched TDM allocations, reservation-based allocations, and random access. As indicated by 400, a remote terminal may be allocated a circuit-switched TDM allocation for an indefinite amount of time (i.e. Frames 1, 2, ... N) until the remote terminal informs the hub 105 that it no longer needs the allocation. These remote terminals utilizing circuit-switched TDM allocations may be using video and/or voice applications that expect constant rates and delays. When the remote terminal with the circuit-switched TDM allocation informs the hub 105 that it no longer needs the circuit-switched TDM allocation, the allocated time-frequency slots may return to the general pool of time-frequency slots of the return data channel 205. For example, a VSAT video and voice application utilizing circuit-switched TDM for a voice session will request a TDM allocation from the hub 105, and the hub 105 will respond with one or more allocations of time-frequency slots of the return data channel 205 in each frame. The VSAT will use the allocation to deliver compressed voice packets during the voice session. When the voice session is over, the VSAT will inform the hub 105 to release its return data channel allocation for use by other remote terminals.

Moreover, as indicated by 405, other remote terminals may receive reservation-based allocations (e.g., Frames 1 & 2) in order to transfer a specified amount of data. When the transfer of the specified amount of data is complete, the allocation is released as indicated by 406. For example, when a new need for data transfer arises at a remote terminal, it may request capacity allocation on return data channel 205. A remote terminal may use the return control channel 210 for an allocation request unless it has already a return data channel allocation, in which case it may piggyback the allocation request to a data transfer. The hub 105 will respond to the request by allocating one or more time-frequency slots to the remote terminal in one or more time frames that are sufficient to fulfill the remote terminal's request.

Finally, some remote terminals may transfer data to the unallocated slots in the return data channel by utilizing random access. These slots could be part of a predetermined resource pool of slots that is dedicated to random access traffic, or they could be slots that are un-assigned, within the reservation resource band. This means that the hub 105 may broadcast to the remote terminals 110 which immediate slots were not assigned to reservation and can be used for random access. For example, in 406, a remote terminal transmits data through a random access burst transmission into a time-frequency slot that was previously allocated to a remote terminal by reservation as shown in 405. Similarly, in 411, a remote terminal transfers data through random access into a time-frequency slot that was previously allocated in 410. These remote terminals that transmit in random access may only have sporadic or minimal needs to transmit small amounts of data.

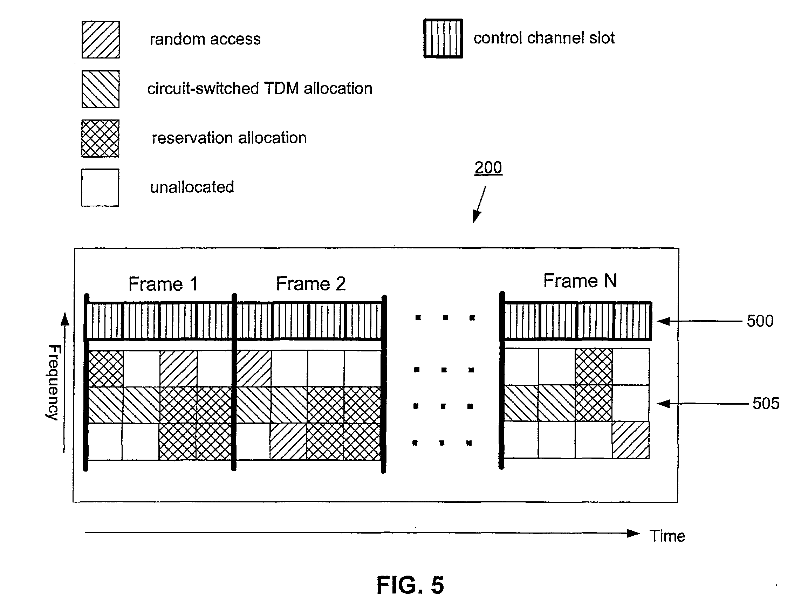

As described above, a satellite communication system utilizing circuit-switched TDM allocations, reservation-based allocations, and random access for the return data channel may utilize a return control channel. As illustrated in FIG. 5, a set of frequencies may be allocated for return control channel 210 while a different set of frequencies may be allocated for return data channels 205.

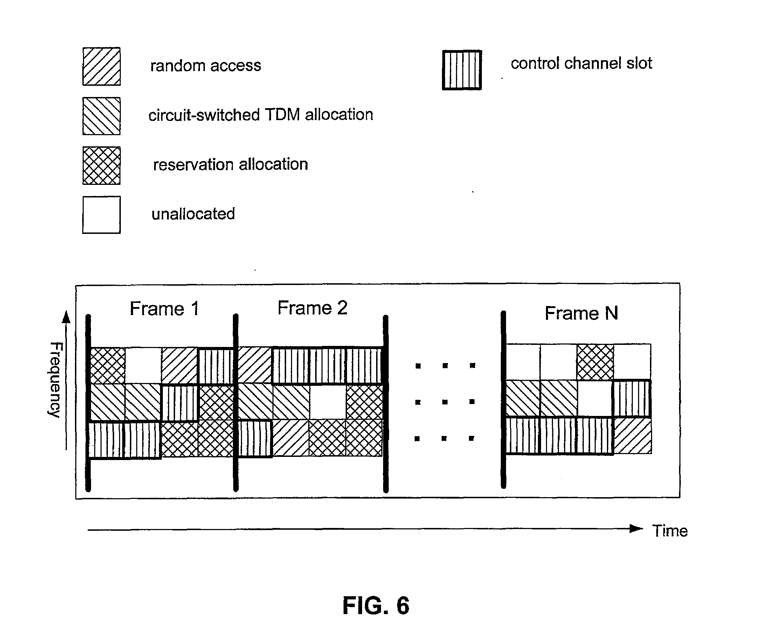

On the other hand, as illustrated by FIG. 6, the return control channel may coexist with the return data channel within the same shared pool of time-frequency resources within the return channel. This means that data and control may be sent in bursts over the same frequency slot, even within the same frame, but in different time slots. These slots designated for control may also utilize the special mini-slots structure, wherein each slot is subdivided into a plurality of mini-slots. In this situation, a plurality of remote terminals may send short control bursts in the mini-slots within each control slot. Further, hub 105 may broadcast information to the remote terminals 110-1 to 110-N indicating which of the time-frequency slots are control slots.

In order for a remote terminal to receive an allocation on the return data channel 205, the remote terminal may make the request for allocation to the hub 105 on the return control channel 210. As will be illustrated below, an aspect of the invention is to allow improved random access to the return control channel 210.

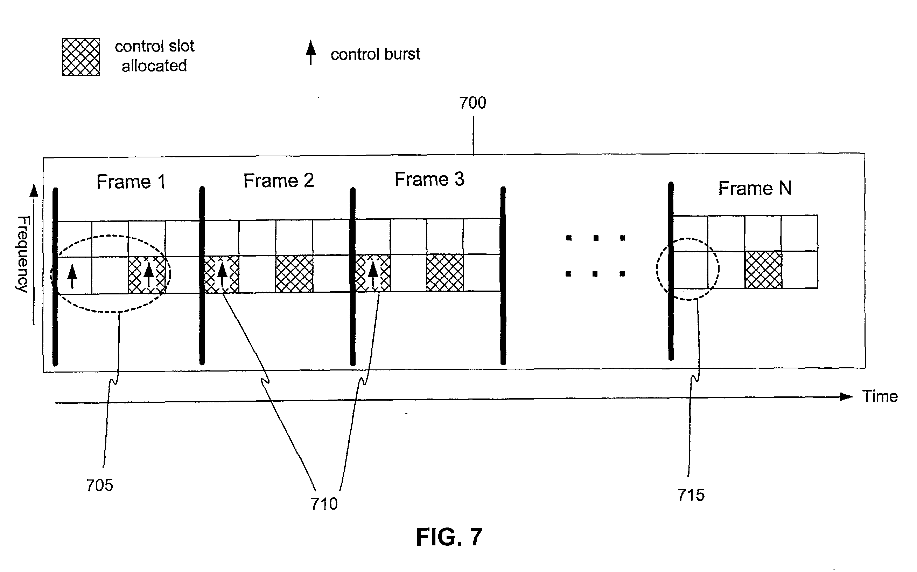

In an aspect of the invention known as "self assignment" as illustratively shown in FIG. 7, the return control channel 210 is accessible by remote terminals through random access. For example, a remote terminal may become active and need to have access to the return control channel 210. Because the return control channel 210 is accessed through random access, there may be delays and retransmissions if the active remote terminal cannot be allocated a slot in return control channel 210. In order to obtain an allocation, the active remote terminal makes at least one request through random access control bursts 705 on the return control channel 210 for an allocation on the return data channel 205. One of the control bursts 705 may collide with a return control slot that has been previously allocated by the hub 105, as illustrated by the control burst 705 in the shaded time-frequency slot. That control burst will not be successfully received by the hub 105. However, eventually one of the random access control bursts 705 on the return control channel 210 will be received by the hub 105, and the hub 105 will send a response back (perhaps with an allocation assignment) to the remote terminal. Once the remote terminal receives the response, the remote terminal determines which time-frequency slot in the frame it successfully used to send the control burst to the hub 105.

As illustrated by 710, the remote terminal will use the time-frequency slot where the burst was successful (and a proper acknowledge was received) as a pointer that determines a self-TDM allocation. For instance, the remote terminal may transmit a control burst in the same successful time-frequency slot of each subsequent frame in the return control channel 210 for as long as the remote terminal would like to keep its self-assigned slot in the return control channel 210. If the remote terminal has an actual need to request a data allocation, it will transmit in the self-assigned slot a request for allocation. If the remote terminal does not have an actual need to request a data allocation, it will instead choose to transmit in the self-assigned slot a placeholder. The placeholder may represent information other than a request for allocation. For example, this information could simply be header information. This means that, in this example, if the remote terminal desires to keep the slot in the return control channel 210, the remote terminal may select a request for allocation or a placeholder and transmit the request for allocation or placeholder in the self-assigned slot in each subsequent frame. As indicated by 710 and 715, when the remote terminal decides that it no longer needs the self-assigned slot in the return control channel 210 or becomes inactive, the remote terminal will simply stop transmitting a control burst in each subsequent frame and the previously self-assigned time-frequency slot will be available for random access by other remote terminals. Thus, the time-frequency slot indicated by 715 is now available for other remote terminals to attempt to allocate this TDM location for their own self-assignments. The control messages from a remote terminal that has self-assigned a TDM allocation may collide with control bursts from other remote terminals that have not yet successfully self-assigned. Nevertheless, the majority of control traffic may be expected to be self-assigned traffic, and since such self-assigned traffic will not collide with itself, the total throughput will increase, compare with using conventional Slotted Aloha access and the same collision probability .

As a further example, the return control channel 210 at a particular frequency may have a 10 millisecond slot length. With considerations such as a reasonable response time, a reasonable frame could contain, e.g., 100 slots. This means that if a VSAT had a successful control transmission on the third time slot in a particular frequency of a frame, the VSAT would have to transmit a control burst every 100 slots within the third time-frequency slot to keep its allocation on the return control channel 210. In other words, the VSAT would have to transmit a control burst in every third time-frequency slot of each frame to keep its self-allocated third time-frequency slot.

These control bursts discontinue when the VSAT no longer desires to keep the time-frequency slot in the return control channel 210. Note that the number of slots passing between successive transmissions of the control burst may be a predefined, globally known, integer number, but is not limited to be the frame length.

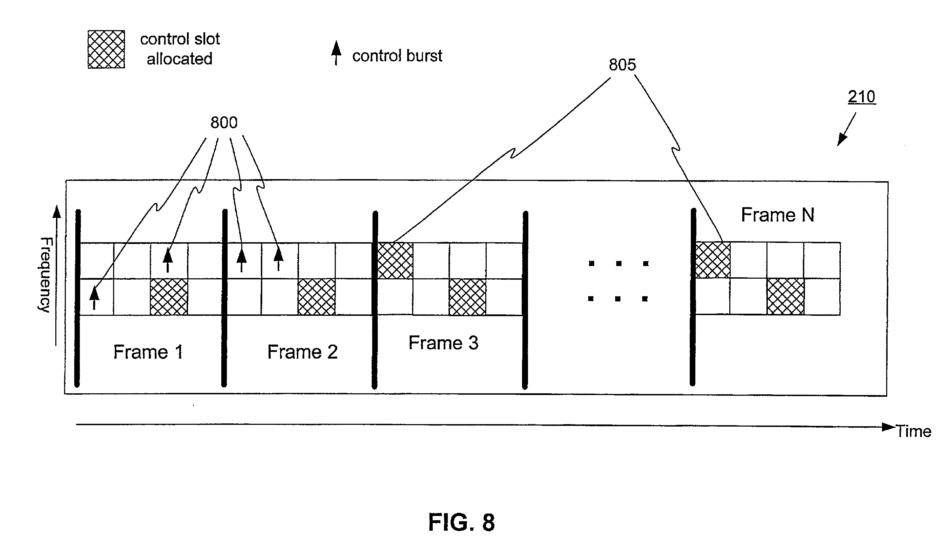

In another aspect of the invention known as "hub assignment," as illustratively shown in FIG. 8, the hub 105 may automatically assign a remote terminal a short-term TDM allocation on the return control channel 210. For example, the hub 105 may analyze the return control channel 210 and sort the remote terminals according to their activity on the return control channel 210. For example, the hub 105 may review the traffic on the return control channel 210 over a time window, such as during the last several seconds, and find an active remote terminal as indicated by control bursts 800 that all originated from the active remote terminal. Accordingly, the active remote terminal may be assigned a time-frequency slot on the return control channel as illustrated by 805. Moreover, the example is not limited to the hub 105 analyzing the traffic on the return control channel 210 but also could include analyzing traffic on the return channel or return data channel 205. Further, the hub 105 could not only review historical data, but also could make real-time predictions of the needs of the remote terminals.

The advantages of providing some of the active or busy remote terminals a short-term TDM capacity on the return control channel while other of the remote terminals may randomly transmit onto the same time-frequency slots (and possibly collide with the TDM-allocated slots) may not be clear at first. However, the mix proves to be an excellent approach for significantly improving the utilization of the return control channel. Active terminals that get such a TDM assignment, either through self-assignment or hub-assignment, should not collide with each other, but it is possible that remote terminals that have just become active but have not yet received a TDM assignment may sends random access transmissions that collide with the TDM assignments on the control channel. For example, suppose the collision probability is desired to be limited to 10% to maintain reasonable response time between capacity request and capacity allocation. Using only pure random access, this means that:

Psuccess = 1 - 0.1 = 0.90, where $P_{success}$ is the probability of a successful transmission; $P_{success} = e^{-G}$, where G is the average number of transmission attempts in a time/frequency slot (load generated by VSATs);

$G = -\ln(P_{success}) = -\ln(0.90) = 0.105$; and

$S = G * P_{success} = 0.105 * 0.90 = 0.10$ (i.e., 10%), where S is the throughput of the control channel.

A throughput of 10% on the control channel perhaps provides a good response time (with a fairly low collision rate), but the channel utilization is poor.

If one assumes that, e.g., 70% of the reservation requests are sent by a first set of VSATs that are assigned a TDM channel allocation while the remainder are sent by a second set of VSATs utilizing random access (30%), then the formulas relating to throughput (S), load (G), and $P_{success}$ change as follows:

Let S1 = 0.7*S (respectively S2 = 0.3*S) be the throughput generated by transmissions made by VSATs that do (respectively do not) gain a TDM control channel allocation and transmit in random access.

Let G1 and G2 be the loads generated by the first and second sets of VSATs, respectively.

Let $P_{success1}$ and $P_{success2}$ be the success probabilities of a transmission attempt made by a VSAT from the first and second sets of VSATs, respectively.

Then the following formulas hold:

$S1 = G1 * P_{success1}$, where $P_{success1} = e^{-G2}$, expressing the fact that transmissions by VSATs with TDM control channel allocations (the first set of VSATs) experience collisions only with VSATs transmitting in random access (the second set of VSATs).

$S2 = G2 * P_{success2}$, where $P_{success2} = (1-G1) * e^{-G2}$, expressing the fact that transmissions in random access experience collisions with both transmissions utilizing TDM control channel allocations and with transmissions in random access mode. (1-G1) is the probability of not colliding with transmissions utilizing TDM control channel allocations, while $e^{-G2}$ is the statistically independent probability of not colliding with random access transmissions.

Finally, one way of measuring the average $P_{success}$ in the network is by calculating the weighted average, $0.70 * P_{success1} + 0.30 * P_{success2}$.

Now, for the same 90% average $P_{success}$ as was assumed for the pure random access case, one can solve the above equations for the combined TDM control channel allocation/random access proposed aspect of the invention, together with the restriction that S1 and S2 hold a 70-to-30 ratio. The solution is G1=0.131, G2=0.065, $P_{success1}$=0.937, $P_{success2}$=0.814, S1=0.123, S2=0.053, and most importantly, S=S1+S2=0.176 (17.6%). This demonstrates a dramatic improvement of 76% in channel utilization (versus S = 0.10 (i.e., 10%) for pure random access), at the same average collision probability.

Another aspect of the return control channel 210 of the satellite communication system 100 is the use of multiple transmissions of control bursts, in random access, to several different randomly-selected control-channel time slots, instead of transmitting a single control burst and waiting for a proper response from the hub 105 (or retransmitting, if a time-out has occurred, suggesting a collision). For example, a remote terminal may transmit two duplicate reservation request packets into two different and randomly selected return control channel slots. For such a situation, the following formulas relating to the total load generated by both duplications and retransmissions (G), $P_{success}$, and throughput (S) are:

$S = G/2 * P_{success}$, where $P_{success} = 1 - (1 - e^{-G}))^{\wedge 2}$, expressing the fact that a pair of transmissions fails if both transmissions fail.

If we desire a $P_{success}$ of 0.90 (i.e., 90%), then

$$G = -\ln(Psuccess) = -\ln (1 - \sqrt{}(1-P_{success})) = -\ln (1 - \sqrt{}(1-0.10)) = 0.380$$

$S = G/2 * P_{success} = (0.380/2) * 0.90 = 0.171$ or 17.1%.

Thus, the transmission of two duplicates results in a dramatic improvement of 71 % in the return control channel throughput.

Further, three duplicates can be transmitted randomly at a single time on the return control channel. Similar calculations relating to the total load generated by three duplicates and retransmissions (G), $P_{success}$, and throughput (S) are as follows:

$$S = G/3 * P_{success,} \text{ where } P_{success} = 1 - (1 - e^{-G}))^{\wedge 3}$$

If we desire a $P_{success}$ of 0.90 (i.e., 90%), then

$$G = -\ln(Psuccess) = -\ln (1 - (1-P_{success})^{1/3}) = -\ln (1 - (1-0.1)^{\wedge 1/3}) = 0.624$$

$$S = G/3 * P_{success} = (0.624/3) * 0.90 = 0.187 \text{ or } 18.7\%.$$

Thus, the transmission of two duplicates results in a dramatic improvement of 87% in the return control channel throughput.

The examples of using two or three duplicate transmissions are not meant to be limiting. For example, one could imagine using four duplicate transmissions. Further, one could imagine combining multiple transmissions with the improvements in the random access of the return control channel as described above.

While illustrative embodiments as described herein embodying various aspects of the present invention are shown by way of example, it will be understood, of course, that the invention is not limited to these embodiments. Modifications may be made by those skilled in the art, particularly in light of the foregoing teachings. For example, each of the elements of the aforementioned embodiments may be utilized alone or in combination with elements of the other embodiments. In addition, the invention has been defined using the appended claims, however these claims are illustrative in that the invention is intended to include the elements and steps described herein in any combination or sub combination of the embodiments and aspects. It will also be appreciated and understood that modifications may be made without departing from the true spirit and scope of the invention.

**Claims**

1. In a satellite communication system, a method comprising steps of:

   allocating for control a first portion of a pool of slots within a return channel;
   allocating for data a second portion of the pool of slots, wherein the second portion is accessible by circuit-switched TDM allocations, reservation allocations, and random access.

2. The method of claim 1, further comprising a step of accessing the first portion of the pool of slots through random access.

3. The method of claim 2, wherein the step of accessing includes transmitting duplicate control bursts on the first portion.

4. The method of claim 3, wherein more than two duplicate control bursts are transmitted.

5. The method of claim 1, wherein each slot in the first portion includes a plurality of mini-slots, the method further comprising step of:

   transmitting data bursts in the second portion of the pool of slots; and
   transmitting control bursts in the mini-slots, the control bursts being shorter in duration than the data bursts.

6. The method of claim 1, wherein the first portion of the pool of slots includes frequencies distinct from frequencies in the second portion of the pool of slots.

7. The method of claim 1, wherein the first and second portions of the pool of slots share a same set of frequencies.

8. The method of claim 1, further comprising a step of allocating a TDM slot allocation for control bursts within the first portion to a first remote terminal.

9. The method of claim 8, wherein the step of allocating the TDM slot allocation includes the first remote terminal allocating for itself the at least one TDM slot allocation.

10. The method of claim 9, further comprising steps of:

    the first remote terminal transmitting a control burst in random access in a chosen slot; and
    receiving a response to the control burst, wherein the step of the first remote terminal allocating for itself the at least one TDM slot allocation is performed responsive to receiving a response to the control burst.

11. The method of claim 10, wherein the TDM slot allocation that the first remote terminal allocates for itself is the chosen slot associated with the response, the response pointing to the chosen slot.

12. The method of claim 8, further including a step of generating by a second remote terminal a random access control burst that collides with the first remote terminal.

13. The method of claim 8, further comprising monitoring traffic generated by a plurality of remote terminals in the return channel, wherein the step of allocating the TDM slot allocation is performed depending upon the traffic.

14. The method of claim 8, further comprising a second remote terminal transmitting control bursts on the first portion through random access.

15. The method of claim 1, further comprising broadcasting an indication of which portion of the pool of slots is allocated as the first portion.

16. The method of claim 15, wherein the allocated first and second portions change dynamically, wherein any slot in the pool of slots that is not assigned for reservation or circuit-switched TDM allocation is available for a control burst or random access data burst.

17. In a satellite communication system, a method comprising steps of:

    allocating a first subset of slots from a single pool of slots using reservation allocations and circuit-switched TDM allocations; and
    making available a second subset of slots from the single pool of slots for control random access and data random access.

**FIG. 1**

EP 1 526 655 A2

FIG. 2

FIG. 3

EP 1 526 655 A2

EP 1 526 655 A2

random access

circuit-switched TDM allocation

reservation allocation

unallocated

400

410    400    411    412

Frequency

205

Frame 1    Frame 2    Frame N

406

Time

405

**FIG. 4**

▨ random access

▨ control channel slot

▨ circuit-switched TDM allocation

▨ reservation allocation

☐ unallocated

<u>200</u>

**FIG. 5**

FIG. 6

EP 1 526 655 A2

**FIG. 7**

EP 1 526 655 A2

FIG. 8

EP 1 526 655 A2

**FIG. 9**